(19) Europäisches Patentamt
European Patent Office
Office européen des brevets

(11) **EP 4 030 139 B1**

(12) **EUROPEAN PATENT SPECIFICATION**

(45) Date of publication and mention
of the grant of the patent:
**24.07.2024 Bulletin 2024/30**

(21) Application number: **22176768.4**

(22) Date of filing: **01.06.2022**

(51) International Patent Classification (IPC):
***G01C 21/30*** *(2006.01)*

(52) Cooperative Patent Classification (CPC):
**G01C 21/30;** G08G 1/0129; Y02D 30/70

(54) **METHOD AND APPARATUS FOR DETERMINING ROAD INFORMATION**

VERFAHREN UND VORRICHTUNG ZUR BESTIMMUNG VON STRASSENINFORMATIONEN

PROCEDE ET APPAREIL POUR DETERMINER DES INFORMATIONS ROUTIERES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.06.2021 CN 202110640562**

(43) Date of publication of application:
**20.07.2022 Bulletin 2022/29**

(73) Proprietor: **Apollo Intelligent Connectivity
(Beijing)
Technology Co., Ltd.
Beijing 100176 (CN)**

(72) Inventor: **WU, Junfa
Beijing, 100176 (CN)**

(74) Representative: **V.O.
P.O. Box 87930
2508 DH Den Haag (NL)**

(56) References cited:
WO-A1-2008/140166    US-A1- 2010 324 815
US-A1- 2011 241 935    US-A1- 2016 327 400

EP 4 030 139 B1

**Description**

TECHNICAL FIELD

The present disclosure relates to the technical field of computers, specifically to the technical field of intelligent transport and navigation, and more specifically to a method for determining road information and an apparatus for determining road information.

BACKGROUND

In the field of intelligent driving technology, vehicle-machine map matching is a very critical module, and mainly plays a role in binding positioning information (i.e., GPS information) with road information, which is referred to as road binding for short.

However, in an actual application process, the generated positioning information has uneven quality due to different suppliers of GPS systems. If the positioning information has a large error, the effect of road binding will be directly affected, and then the planned driving route will be affected in the navigation process.

US 2010/324815 A1 discloses a position detection apparatus including a storage unit for storing map information including road information; a detection unit for detecting information for calculating an absolute position of a moving object; a position calculation unit for calculating the absolute position of the moving object and an error variance relating to an error of the moving object from the detected information; a read-out unit for reading out from the storage unit the road information of a road relating to the calculated absolute position; an existence probability calculation unit for calculating an existence probability of the moving object existing on the road from the absolute position, the error variance, and the read-out road information; a selection unit for selecting a position whose existence probability is maximum out of the calculated existence probability; and a map-matching processing unit for making the selected position a position of the moving object on the road.

WO 2008/140166 A1 discloses a navigation map matching method using a positioning error, the method including: determining whether a moving object is located on a route connected with a predetermined shadow area by referring to map data associated with a location of the moving object moving based on a predetermined search route; determining the positioning error information based on a location change of the moving object from a time of the determining when it is determined that the moving object is located on the route; and analyzing the positioning error information and determining whether the moving object deviates from the route into the shadow area.

US 2011/241935 A1 relates to a method and apparatus for making accuracy improvements to a GPS receiver's navigation solutions. Cartography information from a map database embedded within the GPS receiver is integrated into the position calculations performed by the GPS receiver. The map database embedded within the GPS receiver is optimized for the purpose of improving the accuracy of the GPS receiver's position calculations.

US 2016/327400 A1 discloses a host-vehicle-travel-position specification apparatus that specifies an estimation error range of map matching reference positions based on relation between a map-matching reference trajectory and an estimation error range of estimated absolute positions. The map-matching reference trajectory is corrected to accord with the estimation error range of map matching reference positions. A vehicle travel position is specified based on the corrected map-matching reference trajectory.

SUMMARY

The present disclosure provides a method for determining road information according to claim 1, an apparatus for determining road information according to claim 10, a storage medium according to claim 12, and a computer program product according to claim 13.

BRIEF DESCRIPTION OF THE DRAWINGS

After reading detailed descriptions of non-limiting embodiments with reference to the following accompanying drawings, other features, objectives and advantages of the present disclosure will become more apparent.

Fig. 1 is a diagram of an example system architecture in which some embodiments of the present disclosure may be implemented;
Fig. 2 is a flowchart of an embodiment of a method for determining road information according to the present disclosure;
Fig. 3 is a schematic diagram of an application scenario of the method for determining road information according to the present disclosure;

Fig. 4 is a flowchart of another embodiment of the method for determining road information according to the present disclosure;

Fig. 5 is a schematic structural diagram of an embodiment of an apparatus for determining road information according to the present disclosure; and

Fig. 6 is a block diagram of an electronic device configured to implement the method for determining road information according to embodiments of the present disclosure.

DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Similarly, for clearness and conciseness, descriptions of well-known functions and structures are omitted in the following description.

In the technical solutions of the present disclosure, the acquisition, storage, and application of personal information of a user involved are in conformity with relevant laws and regulations, and do not violate public order and good customs because of adopting necessary security measures.

It should be noted that some embodiments in the present disclosure and some features in the embodiments may be combined with each other on a non-conflict basis. The present disclosure will be described in detail below with reference to the accompanying drawings and in combination with the embodiments.

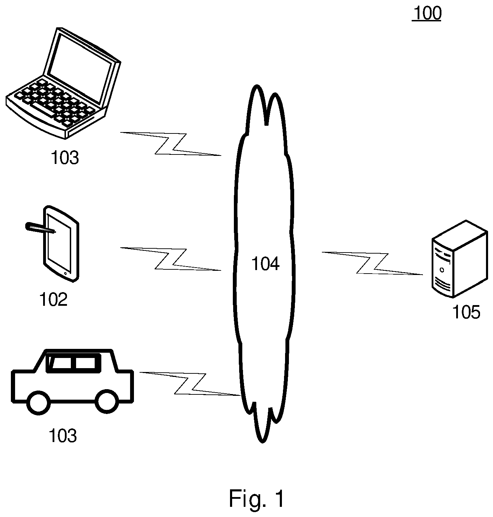

Fig. 1 shows an example system architecture 100 in which a method for determining road information or an apparatus for determining road information according to embodiments of the present disclosure may be implemented.

As shown in Fig. 1, the system architecture 100 may include terminal devices 101, 102, and 103, a network 104, and a server 105. The network 104 serves as a medium providing a communication link between the terminal devices 101, 102, and 103, and the server 105. The network 104 may include various types of connections, such as wired or wireless communication links, or optical cables.

A user may interact with the server 105 using the terminal devices 101, 102, and 103 via the network 104, e.g., to receive or send a message. The terminal devices 101, 102, and 103 may be provided with various communication client applications, such as a video application, a live broadcast application, an instant messaging tool, an email client, and social platform software.

The terminal devices 101, 102, and 103 here may be hardware, or may be software. When the terminal devices 101, 102, and 103 are hardware, the terminal devices may be various electronic devices having display screens, including but not limited to a vehicle, a smart phone, a tablet computer, an ebook reader, a laptop portable computer, a desktop computer, and the like. When the terminal devices 101, 102, and 103 are software, the terminal devices may be installed in the abovelisted electronic devices. The terminal devices may be implemented as a plurality of software programs or software modules (e.g., a plurality of software programs or software modules configured to provide distributed services), or may be implemented as a single software program or software module. This is not specifically limited here.

The server 105 may be a server providing various services, such as a back-end server providing support for the terminal devices 101, 102, and 103. The back-end server may process, e.g., analyze, data such as received current positioning information, and return the processing result (e.g., update information of a positioning error threshold) to the terminal devices.

It should be noted that the method for determining road information provided in the embodiments of the present disclosure may be executed by the server 105 or the terminal devices 101, 102, and 103. Accordingly, the apparatus for determining road information may be provided in the server 105 or the terminal devices 101, 102, and 103.

It should be understood that the numbers of terminal devices, network, and server in Fig. 1 are merely illustrative. Any number of terminal devices, networks, and servers may be provided based on actual requirements.

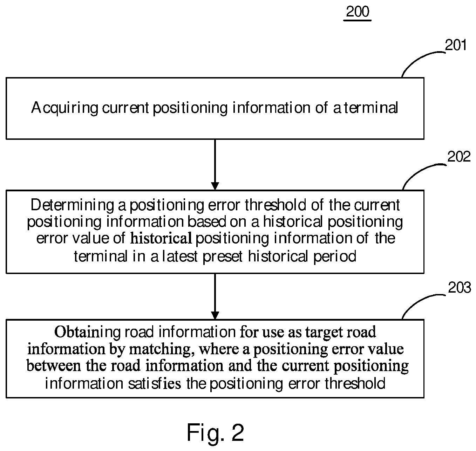

Further referring to Fig. 2, a process 200 of an embodiment of a method for determining road information according to the present disclosure is shown. The method for determining road information, applied to a terminal, includes the following steps:

Step 201: acquiring current positioning information of the terminal.

In the present embodiment, an executing body (e.g., the terminal device shown in Fig. 1) on which the method for determining road information runs may acquire the current positioning information of the terminal, i.e., the current positioning information. The terminal at which this method is used may be a vehicle or a terminal device other than a vehicle, e.g., a mobile terminal such as a mobile phone.

In practice, positioning information of the terminal is position information of the terminal obtained through positioning by a module (such as a GPS module or a Beidou module) that has a positioning function on the terminal.

Step 202: determining a positioning error threshold of the current positioning information based on a historical positioning error value of historical positioning information of the terminal in a latest preset historical period.

In the present embodiment, the executing body may determine a positioning error threshold of the positioning information based on a historical positioning error value of historical positioning information of the terminal. The positioning error threshold here refers to a threshold defined for a value of positioning information deviating from a traveling road (a road network or a driving route). If the value of the positioning information deviating from a certain road exceeds the threshold, the road cannot be bound to the terminal.

The executing body may use an error value within the latest preset historical period to determine the historical positioning error value, where the error value may specifically be a value such as a variance, a standard deviation, and an average value. In the present disclosure, the error value and the positioning error threshold (e.g., the positioning error value, and the historical positioning error value) may be obtained by wave filtering.

For example, the executing body may determine errors between positioning information and a traveling route within the latest historical 30S, calculate a standard deviation of these errors, and use the obtained variance of the errors as the historical positioning error value. The error value may include at least one value indicating an error between the road information and the positioning information. For example, the error value may include a distance of projecting the positioning information onto the road information.

As an example, an original value of the historical positioning error value may be provided by a server. For example, the historical positioning error values corresponding to various machine types (vehicle types) may be identical.

In practice, the executing body may determine the positioning error threshold of the current positioning information based on the historical positioning error value by various approaches. For example, the positioning error threshold of the current positioning information is determined jointly based on the historical positioning error value and an existing positioning error threshold. For example, if the historical positioning error value is smaller than the existing positioning error threshold, the existing positioning error value is increased to obtain the positioning error threshold of the current positioning information, where the positioning error threshold is greater than the historical error threshold. If the historical positioning error value is greater than the existing positioning error threshold, the existing positioning error value is decreased. Alternatively, the executing body may input a current road type and the current positioning information into a preset model to obtain the positioning error threshold outputted from the preset model. The preset model may predict the positioning error threshold based on the current road type and the current positioning information.

Step 203: obtaining road information for use as target road information by matching, wherein a positioning error value between the road information and the current positioning information satisfies the positioning error threshold, and the road information includes at least one of: a road network unit, a driving route unit, or the current positioning information.

The executing body obtains the target road information for the current positioning information based on the positioning error threshold, and the positioning error value between the target road information and the current positioning information satisfies the positioning error threshold. The road information here may include at least one of: a unit of a road network or a unit of a driving route obtained by navigation. Specifically, the unit of the driving route refers to a road section in the driving route, and the unit of the road network refers to a road section in the road network (i.e., a road section in a road of the road network).

In practice, the executing body may acquire a predetermined value determination condition between the positioning error value and the positioning error threshold, i.e., a condition for determining whether the positioning error value is smaller than the positioning error threshold.

The positioning error value is an error value corresponding to the current positioning information. The positioning error threshold is a threshold set for the positioning error value.

The method provided in the above embodiments of the present disclosure can determine the positioning error threshold in real time, thereby matching more accurate road information based on the latest positioning information error.

The determining the positioning error threshold of the current positioning information based on the historical positioning error value of the historical positioning information of the terminal in the latest preset historical period in step 202 includes : acquiring a current road type of the terminal; and determining the positioning error threshold of the current positioning information based on the historical positioning error value and the current road type.

The executing body acquires the current road type of the terminal, and may determine the positioning error threshold of the current positioning information based on the historical positioning error value and the current road type. The current road type refers to a type of a road (i.e., a road section) on which the terminal is located. The current road type may be acquired by the executing body in various ways, for example, by sending a road type request to the server, and receiving the current road type returned from the server. The road type may be preset various road types. For example, the road type may be a tunnel, a ring road, and the like. A road curvature of the tunnel is relatively small, and a road curvature of the ring road is large.

In practice, the executing body may determine the positioning error threshold of the current positioning information based on the historical positioning error value and the current road type by various approaches. In the invention, the positioning error threshold comprises a distance threshold and an angle threshold, each current road type has an adjustment trend corresponding to a positioning error threshold. For example, if the current road type is a ring road, an adjustment trend corresponding to the ring road is to decrease the distance threshold and increase the angle threshold. If the current road type is a tunnel, an adjustment trend corresponding to the tunnel is to increase the distance threshold and decrease the angle threshold.

These implementations can more accurately determine the positioning error threshold based on the current road type.

The acquiring the current road type of the terminal includes : using a road type of road information matched in a previous road matching cycle as the current road type.

In these alternative implementations, when entering the road matching cycle, the executing body may execute step 201 to step 203 to match the road information. The road information indicates a road. Therefore, the executing body may obtain a road type indicated by the road information matched in the last road matching cycle (for example, 1 second or 0.5 second) . In addition, the executing body may use the road type as the current road type, i.e., as the road type in a current road matching cycle.

The invention uses a road type corresponding to the previous road matching cycle as the current road type, thereby improving the accuracy of the current road type as far as possible.

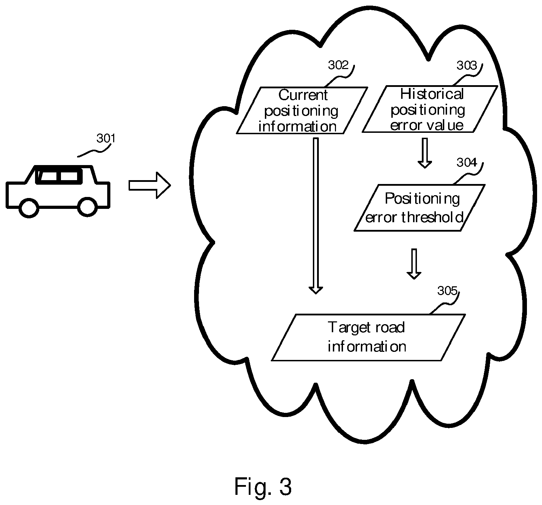

Further referring to Fig. 3, Fig. 3 is a schematic diagram of an application scenario of the method for determining road information according to the present embodiment. In the application scenario of Fig. 3, an executing body 301 acquires current positioning information 302 of a terminal. The executing body 301 determines a positioning error threshold 304 of the current positioning information 302 based on a historical positioning error value 303 of the positioning information of the terminal in a latest preset historical period. The executing body 301 obtains road information or use as target road information 305 by matching, wherein a positioning error value between the road information and the current positioning information 302 satisfies the positioning error threshold 304, and the road information includes at least one of: a road network unit or a driving route unit.

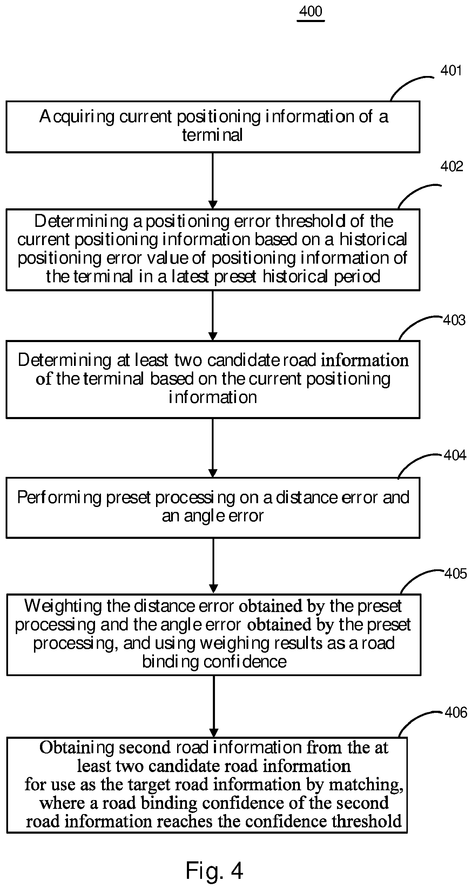

Further referring to Fig. 4, a process 400 of another embodiment of the method for determining road information is shown. In the process 400, the historical positioning error value includes a historical error variance, and the method may include the following steps:

Step 401: acquiring current positioning information of the terminal.

In the present embodiment, an executing body (e.g., the terminal device shown in Fig. 1) on which the method for determining road information runs may acquire the current positioning information of the terminal, i.e., the current positioning information. The positioning error threshold includes a confidence threshold, and the positioning error value includes a distance error and an angle error.

Step 402: determining a positioning error threshold of the current positioning information based on a historical positioning error value of historical positioning information of the terminal in a latest preset historical period.

In the present embodiment, the executing body may determine a positioning error threshold of the positioning information based on a historical positioning error value of historical positioning information of the terminal. The positioning error threshold here refers to a threshold defined for a value of positioning information deviating from a traveling road (a road network or a driving route).

Step 403: determining at least two candidate road information of the terminal based on the current positioning information.

In the present embodiment, the executing body may determine at least two candidate road information of the terminal based on the current positioning information. That is, a terminal device first performs rough matching on the road information, and obtains at least two matching results.

Step 404: performing preset processing on a distance error and an angle error, where, for the distance error and the angle error, the higher a value of the distance error or the angle error is, the smaller a result obtained by the preset processing is.

In the present embodiment, the executing body may perform the preset processing on the distance error and the angle error. The higher the value of the distance error or the angle error used in the preset processing is, the smaller the result obtained by the preset processing is. That is, the larger the error is, the smaller the result obtained by the preset processing is.

The above preset processing may include various processing approaches, such as normalization. In practice, the preset processing may not only include normalization, but also may include a specified processing step before the normalization, and normalize the result of the specified processing step. The specified processing step may be, e.g., inputting the distance error and the angle error into a preset equation or multiplying the distance error and the angle error by a specified coefficient. Many approaches may be used for normalization, for example, may be using a complementary error function for computation. Alternatively, the preset processing may also be, e.g., computing a reciprocal.

Step 405: weighting the distance error obtained by the preset processing and weighting the angle error obtained by the preset processing, and using weighting results as a road binding confidence.

In the present embodiment, the executing body may acquire a weight of the distance error obtained by the preset processing and a weight of the angle error obtained by the preset processing, weight the distance error obtained by the preset processing and weight the angle error obtained by the preset processing, and use the weighting results as the road binding confidence.

Step 406: obtaining second road information from the at least two candidate road information for use as the target road information by matching, wherein a road binding confidence reaches a confidence threshold.

In the present embodiment, the executing body may obtain the target road information from the at least two candidate road information by matching. Specifically, the target road information is the road information with the road binding confidence reaching the confidence threshold.

The present embodiment may determine road information with a small error and a high confidence for use as the target road information, thereby improving the accuracy of the road information.

Alternatively, the above method may further include: determining, for the at least two candidate road information, the weight of the distance error and the weight of the angle error based on a distance error variance and an angle error variance.

In the present embodiment, the historical positioning error value includes the distance error variance and the angle error variance. The executing body may determine, for candidate road information (e.g., each candidate road information) in the at least two candidate road information, the weight of the distance error of the candidate road information and the weight of the angle error of the candidate road information based on the distance error variance and the angle error variance.

In practice, the executing body may determine the weights based on the distance error variance and the angle error variance by various approaches. For example, the executing body may input the distance error variance and the angle error variance into a pre-trained model (such as a deep neural network), and obtain the weight of the distance error and the weight of the angle error outputted from the model. The model may predict the weight of the distance error and the weight of the angle error based on the distance error variance and the angle error variance. In addition, the executing body may alternatively determine the weights using a preset equation, for example, may substitute the distance error variance, the angle error variance, and existing weights of the distance error and the angle error into the equation, and obtain the weight of the distance error and the weight of the angle error.

Compared with the existing weights of the distance error and the angle error, the weights determined for the distance error and the angle error are closer to the distance error variance and the angle error variance respectively.

These alternative implementations may determine the weights based on the historical positioning error value in real time, such that the determined weights are more consistent with the actual conditions of current traveling.

The positioning error threshold further includes a distance error threshold and an angle error threshold; and the obtaining the second road information for use as the target road information by matching, wherein the road binding confidence reaches the confidence threshold includes: obtaining candidate road information by matching, wherein for the candidate road information, a normalized distance error reaches the distance error threshold, a normalized angle error reaches the angle error threshold, and a road binding confidence reaches the confidence threshold, and using road information corresponding to the candidate road information as the target road information.

In these alternative implementations, the candidate road information matched by the executing body has the normalized distance error reaching the distance error threshold, the normalized angle error reaching the angle error threshold, and the road binding confidence reaching the confidence threshold.

These alternative implementations may determine road information with a small distance error, a small angle error, and a small weighting result of the distance error and the angle error, thereby effectively improving the accuracy of the determined road.

In some alternative implementations of any one embodiment of the present disclosure, the obtaining the road information by matching, wherein the positioning error value between the road information and the current positioning information satisfies the positioning error threshold may include: uploading a threshold updating request to a server, and receiving update information about the positioning error threshold returned from the server; and updating the positioning error threshold using the update information to obtain an updated positioning error threshold, and obtaining the road information by matching, wherein the positioning error value between the road information and the current positioning information satisfies the updated positioning error threshold.

In these alternative implementations, the executing body may upload the threshold updating request to the server, and receive update information returned from the server. The update information is used for updating the positioning error threshold. Then, the executing body may update the positioning error threshold using the update information, such that the executing body may obtain the road information satisfying the updated positioning error threshold by matching.

In practice, the update information is information used for updating the positioning error threshold. Specifically, the updated positioning error threshold may be determined based on the update information and the positioning error threshold determined by the terminal. For example, the update information and the positioning error threshold may be inputted into a model or equation to obtain the updated positioning error threshold. In addition, the update information may be a positioning error threshold after the updating, i.e., the updated positioning error threshold itself, or may be a difference value between the updated positioning error threshold and an existing positioning error threshold, i.e., an adjustment range, or may be a computing approach of computing the updated positioning error threshold based on the existing positioning error threshold.

These implementations may update the threshold using the server, thereby further improving the accuracy of the threshold.

Alternatively, the threshold updating request includes a trajectory of the terminal and the target road information; and the uploading the threshold updating request to the server may include: uploading the threshold updating request to the server, where the server determines, based on the trajectory, the road information of the terminal as reference road information, and generates the update information about the positioning error threshold based on the reference road information and the target road information.

In these alternative implementations, the executing body may upload the trajectory of the terminal and the target road information to the server, such that the server may match the terminal with a piece of road information, i.e., the reference road information, and generate the update information based on the reference road information and the target road information.

In practice, the executing body may generate the update information based on the reference road information and the target road information by various approaches. For example, the executing body may compare the target road information with the reference road information, and directly use a difference value obtained from the comparison as the update information. Alternatively, the executing body may perform preset processing on the difference value, and use the result of the preset processing as the update information. The preset processing here may be, e.g., inputting the difference value into a preset equation, or multiplying the difference value by a preset coefficient. In addition, the executing body may alternatively input the reference road information and the target road information into a trained model, and obtain update information outputted from the model. The model may predict the update information based on the reference road and the target road information.

Specifically, the reference road information and the target road information may exist respectively in the forms of a plurality of points, where if there are some unmatching points between the reference road information and the target road information on the terminal, update information may be generated based on these unmatching points.

These alternative implementations may determine the road information based on the trajectory of the terminal. The trajectory eliminates a local error of the road information determined by the terminal in real time, and determines more accurate road information relative to the terminal, thereby accurately correcting the positioning error threshold based on the update information.

In some alternative implementations of any one embodiment of the present disclosure, after the determining the positioning error threshold of the current positioning information, the method further includes: generating a new positioning error threshold based on the following parameters of a current road matching cycle: a positioning error threshold determined by the terminal, a confidence of the positioning error threshold, the number of iterations of the positioning error threshold at the terminal, a reference positioning error threshold determined by the server, a confidence of the reference positioning error threshold, and the number of iterations of the reference positioning error threshold at the server.

In these alternative implementations, the executing body may generate a new positioning error threshold based on the above parameters, and correct the positioning error threshold using the new positioning error threshold. The corrected positioning error threshold is the new positioning error threshold.

The executing body may generate the new positioning error threshold by various approaches, for example, by inputting the above parameters into a pre-trained model, and obtaining a new positioning error threshold outputted from the model. The model may predict the new positioning error threshold.

In some application scenarios, the positioning error threshold determined by the terminal may be set as A1 (for example, the positioning error threshold determined in step 202), the confidence of the positioning error threshold may be set as X1, and the number of iterations of the positioning error threshold at the terminal may be set as N1. The reference positioning error threshold determined by the server is A2, a confidence of the reference positioning error threshold is X2, and the number of iterations of the reference positioning error threshold at the server is N2. Accordingly, the new positioning error threshold may be expressed as:

$$(N1*A1*X1+N2*A2*X2)/(N1*X1+N2*X2),$$

where "*" is multiplication, and the confidence refers to a confidence degree of the positioning error threshold. With the increase of the number of iterations, the confidence increases. The iteration refers to the number of times of determining the positioning error threshold on an electronic device, and the determining the positioning error threshold will generally be iterated on the basis of the existing positioning error threshold.

These implementations may correct the positioning error threshold of the terminal using the reference positioning error threshold of the server, thereby improving the accuracy of the positioning error threshold.

Alternatively, the generating the reference positioning error threshold includes: generating the reference positioning error threshold based on the following parameters of the current road matching cycle: the positioning error threshold determined by the terminal, timeliness of the positioning error threshold , the number of iterations of the positioning error threshold at the terminal, a to-be-corrected positioning error threshold determined by the server, timeliness of the to-be-corrected positioning error threshold, and the number of iterations of the to-be-corrected positioning error threshold at the server.

Specifically, the server may receive the positioning error threshold determined by the terminal, and then determine the reference positioning error threshold. Specifically, the reference positioning error threshold may be determined by various approaches, for example, by inputting these parameters into a trained model, and obtaining the reference positioning error threshold outputted from the model. The model may predict the reference positioning error threshold.

In some application scenarios, the positioning error threshold determined by the terminal may be set as A1, the number of iterations of the positioning error threshold at the terminal may be set as N1, and the timeliness of the positioning error threshold determined by the terminal may be set as B1. The to-be-corrected positioning error threshold determined by the server may be set as A2, the number of iterations of the to-be-corrected positioning error threshold may be set as N2, the timeliness of the to-be-corrected positioning error threshold may be set as B2, and then the update information may be:

$$(N1*A1*B1+N2*A2*B2)/(N1*B1 + N2*B2)$$

where "*" is multiplication, the timeliness parameter may indicate the timeliness of the positioning error threshold, and the value of the timeliness parameter of the positioning error threshold gradually decreases over time.

The to-be-corrected positioning error threshold determined by the server may be determined by various approaches, for example, by using the historical positioning error value and a preset model for predicting the positioning error threshold using the historical positioning error value, or using the current positioning information and a preset model for predicting the positioning error threshold using the current positioning information.

These implementations can accurately determine the reference positioning error threshold.

The road information is a road network unit or a driving route unit; and the obtaining the road information by the matching, where the positioning error value between the road information and the current positioning information satisfies the positioning error threshold includes: matching the current positioning information with the driving route; using, in response to obtaining a matching driving route, the matching driving route as the target road information; and matching, in response to not obtaining the matching driving route, the positioning information with the road network; using, in response to obtaining a matching road network, the matching road network as the target road information; and using, in response to not obtaining the matching road network, the current positioning information as the target road information.

In these alternative implementations, the executing body may first match the driving route unit. If the driving route unit is matched, i.e., it is determined that a driving route unit exists in an area where the current positioning information is located, where a positioning error value between the driving route unit and the current positioning information reaches the position error threshold, the executing body may use the driving route unit as the target road information. If no driving route unit is matched, i.e., a positioning error value between any driving route unit in the area where the current positioning information is located and the current positioning information does not reach the positioning error threshold, the executing body may match the road network unit.

In practice, if the road network unit is matched, i.e., it is determined that a positioning error value between a road network unit in the area where the current positioning information is located and the current positioning information reaches the positioning error threshold, the executing body may use the road network unit as the target road information. If no road network unit is matched, i.e., a positioning error value between any road network unit in the area where the current positioning information is located and the current positioning information does not reach the positioning error threshold, the executing body may directly use the above current positioning information as the target road information.

Specifically, the driving route unit and the road network unit may have corresponding positioning error thresholds respectively.

These alternative implementations can preferentially match the driving route unit, then match the road network unit, and use the current positioning information as the last choice, thereby contributing to determining accurate and detailed road information in the navigation process.

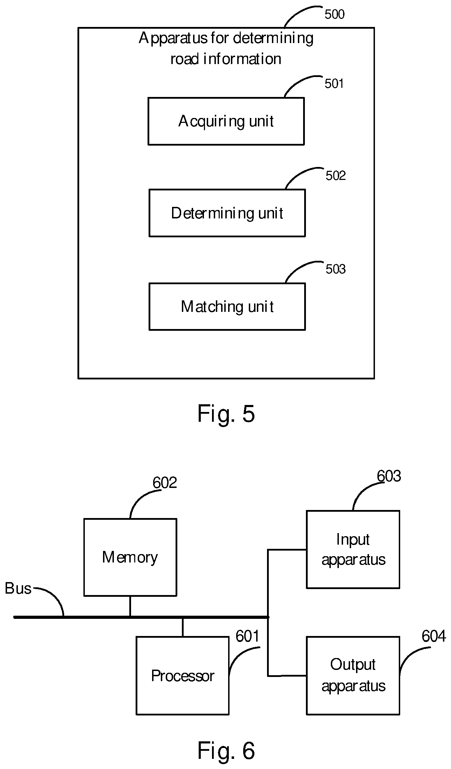

Further referring to Fig. 5, as an implementation of the method shown in the above figures, an embodiment of the present disclosure provides an apparatus for determining road information. The embodiment of the apparatus corresponds to the embodiment of the method shown in Fig. 2. Besides the features disclosed below, the embodiment of the apparatus may further include features or effects identical or corresponding to the embodiment of the method shown in Fig. 2. The apparatus may be specifically applied to various electronic devices.

As shown in Fig. 5, the apparatus 500 for determining road information of the present embodiment includes: an acquiring unit 501, a determining unit 502, and a matching unit 503. The acquiring unit 501 is configured to acquire current positioning information of the terminal; the determining unit 502 is configured to determine a positioning error threshold of the current positioning information based on a historical positioning error value of historical positioning information of the terminal in a latest preset historical period; and the matching unit 503 is configured to obtain road information for use as target road information by matching, wherein a positioning error value between the road information and the current positioning information satisfies the positioning error threshold, and the road information includes at least one of: a road network unit, a driving route unit, or the current positioning information.

In the present embodiment, the specific processing of the acquiring unit 501, the determining unit 502, and the matching unit 503 of the apparatus 500 for determining road information and the technical effects thereof may be described with reference to the related description of step 201, step 202, and step 203 in the corresponding embodiment of Fig. 2, respectively, and are not repeated here.

In some alternative implementations of the present embodiment, the matching unit is further configured to execute the obtaining the road information by the matching, wherein the positioning error value between the road information and the current positioning information satisfies the positioning error threshold by: uploading a threshold updating request to a server, and receiving update information about the positioning error threshold returned from the server; and updating the positioning error threshold using the update information to obtain an updated positioning error threshold, and obtaining the road information by matching, wherein the positioning error value between the road information and the current positioning information satisfies the updated positioning error threshold.

In some alternative implementations of the present embodiment, the threshold updating request includes a trajectory of the terminal and the target road information; and the matching unit is further configured to execute the uploading the threshold updating request to the server by: uploading the threshold updating request to the server, where the server determines, based on the trajectory, the road information of the terminal as reference road information, and generates the update information about the positioning error threshold based on the reference road information and the target road information.

In some alternative implementations of the present embodiment, the apparatus further includes: a generating unit configured to, after the determining the positioning error threshold of the current positioning information, generate a new positioning error threshold based on the following parameters of a current road matching cycle: a positioning error threshold determined by the terminal, a confidence of the positioning error threshold, the number of iterations of the positioning error threshold at the terminal, a reference positioning error threshold determined by the server, a confidence of the reference positioning error threshold, and the number of iterations of the positioning error threshold at the server.

In some alternative implementations of the present embodiment, the generating the reference positioning error threshold includes: generating the reference positioning error threshold based on the following parameters of the current road matching cycle: the positioning error threshold determined by the terminal, timeliness of the positioning error threshold, the number of iterations of the positioning error threshold at the terminal, a to-be-corrected positioning error threshold determined by the server, timeliness of the to-be-corrected positioning error threshold, and the number of iterations of the to-be-corrected positioning error threshold at the server.

In some alternative implementations of the present embodiment, the positioning error threshold includes a confidence threshold, and the positioning error value includes a distance error and an angle error; and the apparatus further includes: an information determining unit configured to determine at least two candidate road information of the terminal based on the current positioning information; and the matching unit is further configured to execute the obtaining the road information for use as the target road information by the matching, wherein the positioning error value between the road information and the current positioning information satisfies the positioning error threshold by: performing preset processing on the distance error and the angle error, where, for the distance error and the angle error, the higher a value of the distance error or the angle error is, the smaller a result obtained by the preset processing is; weighting the distance error obtained by the preset processing and the angle error obtained by the preset processing, and using weighting results as a road binding confidence; and obtaining second road information from the at least two candidate road information for use as the target road information by matching, wherein a road binding confidence reaches the confidence threshold.

In some alternative implementations of the present embodiment, the historical positioning error value includes a distance error variance and an angle error variance; and the apparatus further includes: a weight determining unit configured to determine, for the at least two candidate road information, a weight of the distance error and a weight of the angle error based on the distance error variance and the angle error variance.

In some alternative implementations of the present embodiment, the positioning error threshold further includes a distance error threshold and an angle error threshold; and the matching unit is further configured to execute the obtaining the second road information for use as the target road information by matching, wherein the road binding confidence reaches the confidence threshold by: obtaining candidate road information by matching, wherein for the candidate road information, the distance error obtained by the preset processing reaches the distance error threshold, an angle error obtained by the preset processing reaches the angle error threshold, and a road binding confidence reaches the confidence threshold, and using road information corresponding to the candidate road information as the target road information.

The determining unit is further configured to execute the determining the positioning error threshold of the current positioning information based on the historical positioning error value of the historical positioning information of the terminal in the latest preset historical period by: acquiring a current road type of the terminal; and determining the positioning error threshold of the current positioning information based on the historical positioning error value and the current road type.

The determining unit is further configured to execute the acquiring the current road type of the terminal by: using a road type of the target road information matched in a previous road matching cycle as the current road type.

The road information is a road network unit or a driving route unit; and the matching unit is further configured to execute the obtaining the road information by the matching, wherein the positioning error value between the road information and the current positioning information satisfies the positioning error threshold by: matching the current positioning information with the driving route unit; using, in response to obtaining a matching driving route unit, the matching driving route unit as the target road information; and matching, in response to not obtaining the matching driving route unit, the positioning information with the road network unit; using, in response to obtaining a matching road network unit, the matching road network unit as the target road information; and using, in response to not obtaining the matching road network unit, the current positioning information as the target road information.

According to an embodiment of the present disclosure, the present disclosure further provides an electronic device, a readable storage medium, and a computer program product.

As shown in Fig. 6, a block diagram of an electronic device of the method for determining road information according to embodiments of the present disclosure is shown. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 6, the electronic device includes: one or more processors 601, a memory 602, and interfaces for connecting various components, including a high-speed interface and a low-speed interface. The various components are interconnected using different buses, and may be mounted on a common motherboard or in other manners as required. The processor may process instructions for execution within the electronic device, including instructions stored in the memory or on the memory to display graphical information for a GUI on an external input/output apparatus (e.g., a display device coupled to an interface). In other implementations, a plurality of processors and/or a plurality of buses may be used, as appropriate, along with a plurality of memories and a plurality of memories. Similarly, a plurality of electronic devices may be connected, with each device providing portions of necessary operations (e.g., as a server array, a group of blade servers, or a multi-processor system). In Fig. 6, a processor 601 is taken as an example.

The memory 602 is a non-transient computer readable storage medium provided in the present disclosure. The memory stores instructions executable by at least one processor, such that the at least one processor executes the method for determining road information provided in the present disclosure. The non-transient computer readable storage medium of the present disclosure stores computer instructions. The computer instructions are used for causing a computer to execute the method for determining road information provided in the present disclosure.

As a non-transient computer readable storage medium, the memory 602 may be configured to store non-transient software programs, non-transient computer executable programs and modules, such as the program instructions/modules (e.g., the acquiring unit 501, the determining unit 502, and the matching unit 503 shown in Fig. 5) corresponding to the method for determining road information in some embodiments of the present disclosure. The processor 601 runs non-transient software programs, instructions, and modules stored in the memory 602, so as to execute various function applications and data processing of a server, i.e., implementing the method for determining road information in the above embodiments of the method.

The memory 602 may include a program storage area and a data storage area, where the program storage area may store an operating system and an application program required by at least one function; and the data storage area may store, e.g., data created based on use of the electronic device for determining road information. In addition, the memory 602 may include a high-speed random access memory, and may further include a non-transitory memory, such as at least one disk storage component, a flash memory component, or other non-transitory solid state storage components. In some embodiments, the memory 602 alternatively includes memories remotely disposed relative to the processor 601, and these remote memories may be connected to the electronic device for determining road information via a network. Examples of the above network include, but are not limited to, the Internet, an intranet, a local area network, a mobile communication network, and a combination thereof.

The electronic device of the method for determining road information may further include: an input apparatus 603 and an output apparatus 604. The processor 601, the memory 602, the input apparatus 603, and the output apparatus 604 may be connected through a bus or in other manners. Bus connection is taken as an example in Fig. 6.

The input apparatus 603 may receive inputted number or character information, and generate a key signal input related to user settings and function control of the electronic device for determining road information, e.g., an input apparatus such as a touch screen, a keypad, a mouse, a trackpad, a touchpad, an indicating arm, one or more mouse buttons, a trackball, and a joystick. The output apparatus 604 may include a display device, an auxiliary lighting apparatus (e.g., an LED), a haptic feedback apparatus (e.g., a vibration motor), and the like. The display device may include, but is not limited to, a liquid crystal display (LCD), a light emitting diode (LED) display, and a plasma display. In some implementations, the display device may be a touch screen.

Various implementations of the systems and technologies described herein may be implemented in a digital electronic circuit system, an integrated circuit system, an ASIC (application specific integrated circuit), computer hardware, firmware, software, and/or a combination thereof. The various implementations may include: being implemented in one or more computer programs, where the one or more computer programs may be executed and/or interpreted on a programmable system including at least one programmable processor, and the programmable processor may be a specificpurpose or general-purpose programmable processor, which may receive data and instructions from a storage system, at least one input apparatus and at least one output apparatus, and send the data and instructions to the storage system, the at least one input apparatus and the at least one output apparatus..

These computing programs (also known as programs, software, software applications, or code) include machine instructions for a programmable processor, and may be implemented in a high-level procedural and/or objectoriented programming language, and/or in an assembly/machine language. As used herein, the terms "machine readable medium" and "computer readable medium" refer to any computer program product, device, and/or apparatus (e.g., a magnetic disk, an optical disk, a memory, or a programmable logic device (PLD)) configured to provide machine instructions and/or data to a programmable processor, and include a machine readable medium receiving machine instructions as machine readable signals. The term "machine readable signal" refers to any signal used to provide machine instructions and/or data to a programmable processor.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback) ; and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, which is also known as a cloud computing server or a cloud host, and is a host product in a cloud computing service system to solve the defects of difficult management and weak service extendibility existing in conventional physical hosts and VPS services ("virtual private server", or "VPS" for short). The server may also be a distributed system server, or a server combined with a blockchain.

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed substantially in parallel, or sometimes be executed in a reverse sequence, depending on the functions involved. It should also be noted that each block in the block diagrams and/or flow charts as well as a combination of blocks in the block diagrams and/or flow charts may be implemented using a dedicated hardwarebased system executing specified functions or operations, or by a combination of dedicated hardware and computer instructions.

The units involved in the embodiments of the present disclosure may be implemented by software or hardware. The described units may also be provided in a processor, for example, described as: a processor including an acquiring unit, a determining unit, and a matching unit. The names of these units do not constitute a limitation to such units themselves in some cases. For example, the acquiring unit may be further described as "a unit configured to acquire current positioning information of a terminal."

In another aspect, the present disclosure further provides a computer readable medium. The computer readable medium may be included in the apparatus described in the above embodiments, or a stand-alone computer readable medium without being assembled into the apparatus. The computer readable medium carries one or more programs. The one or more programs, when executed by the apparatus, cause the apparatus to: acquire current positioning information of a terminal; determine a positioning error threshold of the current positioning information based on a historical positioning error value of historical positioning information of the terminal in a latest preset historical period; and obtain road information for use as target road information by matching, wherein a positioning error value between the road information and the current positioning information satisfies the positioning error threshold, and the road information includes at least one of: a road network unit, a driving route unit, or the current positioning information.

**Claims**

1. A method for determining road information, applied to a terminal, the method comprising, in a matching cycle:

    acquiring (201) current positioning information of the terminal;
    determining (202) a positioning error threshold of the current positioning information based on a historical positioning error value of historical positioning information of the terminal in a latest preset historical period; and
    obtaining (203) road information for the current positioning information for use as target road information based on the positioning error threshold, wherein a positioning error value between the road information and the current positioning information is smaller than the positioning error threshold, and the road information includes at least one of: a road network unit or a driving route unit, wherein the road network unit refers to a road section in a road network, and the driving route unit refers to a road section in a driving route;
    **characterized in that**:
    the determining the positioning error threshold of the current positioning information based on the historical positioning error value of the historical positioning information of the terminal in the latest preset historical period comprises:

        acquiring a current road type of the terminal; and
        determining the positioning error threshold of the current positioning information based on the historical positioning error value and the current road type, wherein the positioning error threshold comprises a distance error threshold and an angle error threshold, and the current road type has an adjustment trend corresponding to the positioning error threshold, for instance: if the current road type is a ring road, an adjustment trend corresponding to the ring road is to decrease the distance threshold and increase the angle threshold; or if the current road type is a tunnel, an adjustment trend corresponding to the tunnel is to increase the distance threshold and decrease the angle threshold;
        wherein the acquiring the current road type of the terminal comprises:
        using a road type of the target road information matched in a previous road matching cycle as the current road type.

2. The method according to claim 1, wherein the obtaining the road information for the current positioning information based on the positioning error threshold, wherein the positioning error value between the road information and the current positioning information is smaller than the positioning error threshold, comprises:

    uploading a threshold updating request to a server, and receiving update information about the positioning error threshold returned from the server; and
    updating the positioning error threshold using the update information to obtain an updated positioning error threshold, and obtaining road information based on the updated positioning error threshold, wherein the positioning error value between the road information and the current positioning information is smaller than the updated positioning error threshold.

3. The method according to claim 2, wherein the threshold updating request comprises a trajectory of the terminal and the target road information; and

the uploading the threshold updating request to the server comprises:

uploading the threshold updating request to the server, wherein the server determines, based on the trajectory, the road information of the terminal as reference road information, and generates the update information about the positioning error threshold based on the reference road information and the target road information.

4. The method according to any one of claims 1 to 3, wherein after the determining the positioning error threshold of the current positioning information, the method further comprises:

generating a new positioning error threshold based on following parameters:

a positioning error threshold determined by the terminal, a confidence of the positioning error threshold, a number of times of determining of the positioning error threshold at the terminal, a reference positioning error threshold determined by a server, a confidence of the reference positioning error threshold, and a number of times of determining of the reference positioning error threshold at the server.

5. The method according to claim 4, wherein the generating the reference positioning error threshold comprises:

generating the reference positioning error threshold based on following parameters of the current road matching cycle:

the positioning error threshold determined by the terminal, timeliness of the positioning error threshold, the number of iterations of the positioning error threshold at the terminal, a to-be-corrected positioning error threshold determined by the server, timeliness of the to-be-corrected positioning error threshold, and the number of iterations of the to-be-corrected positioning error threshold at the server.

6. The method according to any one of claims 1 to 5, wherein the positioning error threshold comprises a confidence threshold, and the positioning error value comprises a distance error and an angle error; and

the method further comprises: determining (403) at least two pieces of candidate road information of the terminal based on the current positioning information; and

the obtaining the road information for the current positioning information based on the positioning error threshold, wherein the positioning error value between the road information and the current positioning information satisfies the positioning error threshold, comprises:

for each distance error and each angle error corresponding to each of the at least two candidate road information:

performing (404) preset processing on the distance error and the angle error, wherein, for the distance error and the angle error, the higher a value of the distance error or the angle error is, the smaller a result obtained by the preset processing is;

weighting (405) a preset processed distance error obtained and a preset processed angle error, and using weighting results as a road binding confidence, wherein road binding refers to binding positioning information with road information; and

obtaining (406) second road information from the at least two pieces of candidate road information for use as the target road information, wherein a road binding confidence of the second road information reaches the confidence threshold.

7. The method according to any one of claims 1 to 6, wherein the historical positioning error value comprises a distance error variance and an angle error variance; and

the method further comprises:

determining, for at least two candidate road information, a weight of the distance error and a weight of the angle error based on the distance error variance and the angle error variance;

wherein the determining, for at least two candidate road information, a weight of the distance error and a weight of the angle error based on the distance error variance and the angle error variance, comprises:

inputting the distance error variance and the angle error variance into a pre-trained model; and

obtaining the weight of the distance error and the weight of the angle error outputted from the pre-trained model.

8. The method according to claim 6, wherein

the obtaining the second road information for use as the target road information for the current positioning information based on the positioning error threshold, wherein the road binding confidence of the second road information reaches the confidence threshold, comprises:

obtaining second candidate road information from the at least two pieces of candidate road information, wherein for the second candidate road information, the preset processed distance error reaches the distance error threshold, the preset processed angle error reaches the angle error threshold, and the road binding confidence reaches the confidence threshold; and using road information corresponding to the second candidate road information as the target road information.

9. The method according to any one of claims 1 to 8, wherein the road information is the road network unit, the driving route unit, or the positioning information; and
the obtaining the road information by the matching, wherein the positioning error value between the road information and current positioning information satisfies the positioning error threshold, comprises:

matching the current positioning information with the driving route unit;
using, in response to obtaining a matching driving route unit, the matching driving route unit as the target road information; and
matching, in response to not obtaining the matching driving route unit, the positioning information with the road network unit; using, in response to obtaining a matching road network unit, the matching road network unit as the target road information; and using, in response to not obtaining the matching road network unit, the current positioning information as the target road information.

10. An apparatus for determining road information, applied to a terminal, the apparatus comprising:

an acquiring (501) unit configured to acquire current positioning information of the terminal;
a determining (502) unit configured to determine a positioning error threshold of the current positioning information based on a historical positioning error value of historical positioning information of the terminal in a latest preset historical period; and
a matching unit (503) configured to obtain road information for the current positioning information for use as target road information based on the positioning error threshold, wherein a positioning error value between the road information and the current positioning information is smaller than the positioning error threshold, and the road information includes at least one of: a road network unit or a driving route unit,
wherein the road network unit refers to a road section in a road network, and the driving route unit refers to a road section in a driving route;
**characterized in that**:

the determining unit is further configured to execute the determining the positioning error threshold of the current positioning information based on the historical positioning error value of the historical positioning information of the terminal in the latest preset historical period by: acquiring a current road type of the terminal; and determining the positioning error threshold of the current positioning information based on the historical positioning error value and the current road type,
wherein the positioning error threshold comprises a distance error threshold and an angle error threshold, and the current road type has an adjustment trend corresponding to the positioning error threshold, for instance: if the current road type is a ring road, an adjustment trend corresponding to the ring road is to decrease the distance threshold and increase the angle threshold; or if the current road type is a tunnel, an adjustment trend corresponding to the tunnel is to increase the distance threshold and decrease the angle threshold;
wherein the determining unit is further configured to execute the acquiring the current road type of the terminal by: using a road type of the target road information matched in a previous road matching cycle as the current road type.

11. The apparatus according to claim 10, wherein the matching unit is configured to execute the obtaining the road information for the current positioning information based on the positioning error threshold, wherein the positioning error value between the road information and the current positioning information is smaller than the positioning error threshold by:

uploading a threshold updating request to a server, and receiving update information about the positioning error threshold returned from the server; and
updating the positioning error threshold using the update information to obtain an updated positioning error threshold, and obtaining the road information based on the updated positioning error threshold, wherein the positioning error value between the road information and the current positioning information is smaller than the updated positioning error threshold.

12. A non-transitory computer readable storage medium storing computer instructions, wherein the computer instructions are used for causing a computer to execute the method according to any one of claims 1 to 9.

13. A computer program product, comprising a computer program, wherein the computer program, when executed by a processor, implements the method according to any one of claims 1 to 9.


**Patentansprüche**

1. Verfahren zum Bestimmen von Straßeninformationen, angewandt auf ein Endgerät, wobei das Verfahren in einem Abgleichzyklus umfasst:

Erfassen (201) aktueller Positionierungsinformationen des Endgeräts;
Bestimmen (202) eines Positionierungsfehlerschwellenwerts der aktuellen Positionierungsinformationen auf der Grundlage eines historischen Positionierungsfehlerwerts der historischen Positionierungsinformationen des Endgeräts in einer letzten voreingestellten historischen Periode; und
Erhalten (203) von Straßeninformationen für die aktuellen Positionierungsinformationen zur Verwendung als Zielstraßeninformationen auf der Grundlage des Positionierungsfehlerschwellenwerts, wobei ein Positionierungsfehlerwert zwischen den Straßeninformationen und den aktuellen Positionierungsinformationen kleiner als der Positionierungsfehlerschwellenwert ist, und die Straßeninformationen mindestens eines enthalten von: einer Straßennetzeinheit oder einer Fahrrouteneinheit, wobei sich die Straßennetzeinheit auf einen Straßenabschnitt in einem Straßennetz und die Fahrrouteneinheit auf einen Straßenabschnitt in einer Fahrroute bezieht;
**dadurch gekennzeichnet dass**:

das Bestimmen des Positionierungsfehlerschwellenwerts der aktuellen Positionierungsinformationen auf der Grundlage des historischen Positionierungsfehlerwerts der historischen Positionierungsinformation des Endgeräts in der letzten voreingestellten historischen Periode umfasst:
Erfassen eines aktuellen Straßentyps des Endgeräts; und
Bestimmen des Positionierungsfehlerschwellenwerts der aktuellen Positionierungsinformationen auf der Grundlage des historischen Positionierungsfehlerwertes und des aktuellen Straßentyps, wobei der Positionierungsfehlerschwellenwert einen Abstandsfehlerschwellenwert und einen Winkelfehlerschwellenwert umfasst und der aktuelle Straßentyp eine Anpassungstendenz aufweist, die dem Positionierungsfehlerschwellenwert entspricht: wenn es sich etwa bei dem aktuellen Straßentyp um eine Ringstraße handelt, eine der Ringstraße entsprechende Anpassungstendenz darin besteht, den Abstandsschwellenwert zu verringern und den Winkelschwellenwert zu erhöhen; oder wenn der aktuelle Straßentyp ein Tunnel ist, eine dem Tunnel entsprechende Anpassungstendenz darin besteht, den Abstandsschwellenwert zu erhöhen und den Winkelschwellenwert zu verringern;
wobei das Erfassen des aktuellen Straßentyps des Endgeräts umfasst:
Verwenden eines Straßentyps der Zielstraßeninformationen, die in einem früheren Straßenabgleichzyklus abgeglichen wurden, als aktueller Straßentyp.

2. Verfahren nach Anspruch 1, wobei das Erhalten der Straßeninformationen für die aktuellen Positionierungsinformationen auf der Grundlage des Positionierungsfehlerschwellenwerts, wobei der Positionierungsfehlerwert zwischen den Straßeninformationen und den aktuellen Positionierungsinformationen kleiner als der Positionierungsfehlerschwellenwert ist, umfasst:

Hochladen einer Schwellenwertaktualisierungsanforderung zu einem Server und Empfangen von Aktualisierungsinformationen über den Positionierungsfehlerschwellenwert, der von dem Server zurückgegeben wird; und
Aktualisieren des Positionierungsfehlerschwellenwerts unter Verwendung der Aktualisierungsinformationen, um einen aktualisierten Positionierungsfehlerschwellenwert zu erhalten, und Erhalten von Straßeninformationen auf der Grundlage des aktualisierten Positionierungsfehlerschwellenwerts, wobei der Positionierungsfehlerwert zwischen den Straßeninformationen und den aktuellen Positionierungsinformationen kleiner als der aktualisierte Positionierungsfehlerschwellenwert ist,

**3.** Verfahren nach Anspruch 2, wobei die Schwellenwertaktualisierungsanforderung eine Trajektorie des Endgeräts und die Zielstraßeninformationen umfasst; und
das Hochladen der Schwellenwertaktualisierungsanforderung auf den Server umfasst:
Hochladen der Schwellenwertaktualisierungsanforderung an den Server, wobei der Server auf der Grundlage der Trajektorie die Straßeninformationen des Endgeräts als Referenzstraßeninformationen bestimmt und die Aktualisierungsinformationen über den Positionierungsfehlerschwellenwert auf der Grundlage der Referenzstraßeninformationen und der Zielstraßeninformationen erzeugt.

**4.** Verfahren nach einem der Ansprüche 1 bis 3, wobei das Verfahren nach dem Bestimmen des Positionierungsfehlerschwellenwerts der aktuellen Positionierungsinformationen ferner umfasst:
Erzeugen eines neuen Positionierungsfehlerschwellenwerts auf der Grundlage der folgenden Parameter:
eines durch das Endgerät bestimmten Positionierungsfehlerschwellenwerts, eines Vertrauens des Positionierungsfehlerschwellenwerts, einer Anzahl von Malen des Bestimmens des Positionierungsfehlerschwellenwerts am Endgerät, eines durch einen Server bestimmten Referenz-Positionierungsfehlerschwellenwerts, eines Vertrauens des Referenz-Positionierungsfehlerschwellenwerts und einer Anzahl von Malen des Bestimmens des Referenz-Positionierungsfehlerschwellenwerts am Server.

**5.** Verfahren nach Anspruch 4, wobei das Erzeugen des Referenz-Positionierungsfehlerschwellenwerts umfasst:
Erzeugen des Referenz-Positionierungsfehlerschwellenwerts auf der Grundlage der folgenden Parameter des aktuellen Straßenabgleichzyklus:
des vom Endgerät bestimmten Positionierungsfehlerschwellenwerts, der Aktualität des Positionierungsfehlerschwellenwerts, der Anzahl der Iterationen des Positionierungsfehlerschwellenwerts am Endgerät, eines vom Server bestimmten zu korrigierenden Positionierungsfehlerschwellenwerts, der Aktualität des zu korrigierenden Positionierungsfehlerschwellenwerts und der Anzahl der Iterationen des zu korrigierenden Positionierungsfehlerschwellenwerts am Server.

**6.** Verfahren nach einem der Ansprüche 1 bis 5, wobei der Positionierungsfehlerschwellenwert einen Vertrauensschwellenwert umfasst und der Positionierungsfehlerwert einen Abstandfehler und einen Winkelfehler umfasst; und

Bestimmen (403) von mindestens zwei Kandidaten-Straßeninformationen des Endgeräts auf der Grundlage der aktuellen Positionierungsinformationen; und
das Erhalten der Straßeninformationen für die aktuellen Positionierungsinformationen auf der Grundlage des Positionierungsfehlerschwellenwerts, wobei der Positionierungsfehlerwert zwischen den Straßeninformationen und den aktuellen Positionierungsinformationen den Positionierungsfehlerschwellenwert erfüllt, umfasst:
für jeden Abstandfehler und jeden Winkelfehler, die zu jeder der mindestens zwei Kandidaten-Straßeninformationen gehören:

Durchführen (404) eines voreingestellten Verarbeitens des Abstandfehlers und des Winkelfehlers, wobei für den Abstandsfehler und den Winkelfehler ein durch die voreingestellte Verarbeitung erhaltenes Ergebnis umso kleiner ist, je höher ein Wert des Abstandsfehlers oder des Winkelfehlers ist;
Gewichten (405) eines erhaltenen voreingestellten verarbeiteten Abstandfehlers und eines voreingestellten verarbeiteten Winkelfehlers und Verwenden der Gewichtungsergebnisse als Straßenbindungsvertrauen, wobei sich Straßenbindung auf das Binden von Positionierungsinformationen mit Straßeninformationen bezieht; und
Erhalten (406) von zweiten Straßeninformationen aus den mindestens zwei Kandidaten-Straßeninformationen zur Verwendung als die Zielstraßeninformationen, wobei ein Straßenbindungsvertrauen der zweiten Straßeninformationen den Vertrauensschwellenwert erreicht.

**7.** Verfahren nach einem der Ansprüche 1 bis 6, wobei der historische Positionierungsfehlerwert eine Abstandfehlervarianz und eine Winkelfehlervarianz umfasst; und
das Verfahren ferner umfasst:

Bestimmen einer Gewichtung des Abstandfehlers und einer Gewichtung des Winkelfehlers auf der Grundlage der Abstandfehlervarianz und der Winkelfehlervarianz für mindestens zwei Kandidaten-Straßeninformationen;
wobei das Bestimmen einer Gewichtung des Abstandfehlers und einer Gewichtung des Winkelfehlers auf der Grundlage der Abstandfehlervarianz und der Winkelfehlervarianz für mindestens zwei Kandidaten-Straßeninformationen umfasst:

Eingeben der Abstandfehlervarianz und der Winkelfehlervarianz in ein vortrainiertes Modell; und Erhalten der Gewichtung des Abstandfehlers und der Gewichtung des Winkelfehlers, die von dem vortrainierten Modell ausgegeben werden.

8. Verfahren nach Anspruch 6, wobei das Erhalten der zweiten Straßeninformationen zur Verwendung als die Zielstraßeninformationen für die aktuellen Positionierungsinformationen auf der Grundlage des Positionierungsfehlerschwellenwerts, wobei das Straßenverbindungsvertrauen der zweiten Straßeninformationen den Vertrauensschwellenwert erreicht, umfasst: Erhalten von zweiten Kandidaten-Straßeninformationen aus den mindestens zwei Kandidaten-Straßeninformationen, wobei für die zweiten Kandidaten-Straßeninformationen der voreingestellte verarbeitete Abstandfehler den Abstandsfehlerschwellenwert erreicht, der voreingestellte verarbeitete Winkelfehler den Winkelfehlerschwellenwert erreicht und das Straßenverbindungsvertrauen den Vertrauensschwellenwert erreicht; und Verwenden von Straßeninformationen, die den zweiten Kandidaten-Straßeninformationen entsprechen, als Zielstraßeninformationen.

9. Verfahren nach einem der Ansprüche 1 bis 8, wobei es sich bei den Straßeninformationen um die Straßennetzeinheit, die Fahrrouteneinheit oder die Positionierungsinformationen handelt; und das Erhalten der Straßeninformationen durch das Abgleichen, wobei der Positionierungsfehlerwert zwischen den Straßeninformationen und aktuellen Positionierungsinformationen den Positionierungsfehlerschwellenwert erfüllt, umfasst:

Abgleichen der aktuellen Positionierungsinformationen mit der Fahrrouteneinheit; Verwenden der übereinstimmenden Fahrrouteneinheit als Zielstraßeninformationen als Reaktion auf das Erhalten einer übereinstimmenden Fahrrouteneinheit; und Abgleichen der Positionierungsinformationen mit der Straßennetzeinheit als Reaktion auf das Nichterhalten der übereinstimmenden Fahrrouteneinheit; Verwenden der übereinstimmenden Straßennetzeinheit als Reaktion auf das Erhalten einer übereinstimmenden Straßennetzeinheit als die Zielstraßeninformationen; und Verwenden als Reaktion auf das Nichterhalten der übereinstimmenden Straßennetzeinheit der aktuellen Positionierungsinformationen als die Zielstraßeninformationen.

10. Vorrichtung zum Bestimmen von Straßeninformationen, die an einem Endgerät angebracht ist, wobei die Vorrichtung umfasst:

eine Erfassungseinheit (501), die konfiguriert ist, um aktuelle Positionierungsinformationen des Endgeräts zu erfassen; eine Bestimmungseinheit (502), die konfiguriert ist, um einen Positionierungsfehlerschwellenwert der aktuellen Positionierungsinformationen auf der Grundlage eines historischen Positionierungsfehlerwerts der historischen Positionierungsinformationen des Endgeräts in einer letzten voreingestellten historischen Periode zu bestimmen; und eine Abgleicheinheit (503), die konfiguriert ist, um Straßeninformationen für die aktuellen Positionierungsinformationen zur Verwendung als Zielstraßeninformationen auf der Grundlage des Positionierungsfehlerschwellenwerts zu erhalten, wobei ein Positionierungsfehlerwert zwischen den Straßeninformationen und den aktuellen Positionierungsinformationen kleiner als der Positionierungsfehlerschwellenwert ist, und die Straßeninformationen mindestens eines enthalten von: einer Straßennetzeinheit oder einer Fahrrouteneinheit, wobei sich die Straßennetzeinheit auf einen Straßenabschnitt in einem Straßennetz und die Fahrrouteneinheit auf einen Straßenabschnitt in einer Fahrroute bezieht; **dadurch gekennzeichnet dass**: die Bestimmungseinheit ferner konfiguriert ist, um das Bestimmen des Positionierungsfehlerschwellenwerts der aktuellen Positionierungsinformationen auf der Grundlage des historischen Positionierungsfehlerwerts der historischen Positionierungsinformationen des Endgeräts in der letzten voreingestellten historischen Periode durchzuführen, durch:

Erfassen eines aktuellen Straßentyps des Endgeräts; und Bestimmen des Positionierungsfehlerschwellenwerts der aktuellen Positionierungsinformationen auf der Grundlage des historischen Positionierungsfehlerwertes und des aktuellen Straßentyps, wobei der Positionierungsfehlerschwellenwert einen Abstandsfehlerschwellenwert und einen Winkelfehlerschwellenwert umfasst und der aktuelle Straßentyp eine Anpassungstendenz aufweist, die dem Positionierungsfehlerschwellenwert entspricht: wenn es sich etwa bei dem aktuellen Straßentyp um eine Ringstraße handelt, eine der Ringstraße entsprechende Anpassungstendenz darin besteht, den Abstandsschwellenwert zu verringern und den Winkelschwellenwert zu erhöhen; oder wenn der aktuelle Straßentyp ein Tunnel ist, eine dem Tunnel entsprechende Anpassungstendenz darin besteht, den Abstandsschwellenwert zu erhöhen und den Winkelschwellenwert zu verringern;

wobei die Bestimmungseinheit ferner konfiguriert ist, um das Erfassen des aktuellen Straßentyps des Endgeräts durchzuführen:

Verwenden eines Straßentyps der Zielstraßeninformationen, die in einem früheren Straßenabgleichzyklus abgeglichen wurden, als aktueller Straßentyp.

11. Vorrichtung nach Anspruch 10, wobei die Abgleicheinheit konfiguriert ist, um das Erhalten der Straßeninformationen für die aktuellen Positionierungsinformationen auf der Grundlage des Positionierungsfehlerschwellenwerts auszuführen, wobei der Positionierungsfehlerwert zwischen den Straßeninformationen und den aktuellen Positionierungsinformationen kleiner als der Positionierungsfehlerschwellenwert ist, durch:

Hochladen einer Schwellenwertaktualisierungsanforderung zu einem Server und Empfangen von Aktualisierungsinformationen über den Positionierungsfehlerschwellenwert, der von dem Server zurückgegeben wird; und
Aktualisieren des Positionierungsfehlerschwellenwerts unter Verwendung der Aktualisierungsinformationen, um einen aktualisierten Positionierungsfehlerschwellenwert zu erhalten, und Erhalten der Straßeninformationen auf der Grundlage des aktualisierten Positionierungsfehlerschwellenwerts, wobei der Positionierungsfehlerwert zwischen den Straßeninformationen und den aktuellen Positionierungsinformationen kleiner als der aktualisierte Positionierungsfehlerschwellenwert ist.

12. Nicht-transitorisches, computerlesbares Speichermedium, das Computerbefehle speichert, wobei die Computerbefehle dazu verwendet werden, einen Computer zu veranlassen, das Verfahren nach einem der Ansprüche 1 bis 9 auszuführen.

13. Computerprogrammprodukt, umfassend ein Computerprogramm, wobei das Computerprogramm, wenn es von einem Prozessor ausgeführt wird, das Verfahren nach einem der Ansprüche 1 bis 9 implementiert.

**Revendications**

1. Procédé pour déterminer des informations routières, appliquées à un terminal, le procédé comprenant, dans un cycle de mise en correspondance:

l'acquisition (201) d'informations de positionnement actuelles du terminal;
la détermination (202) d'un seuil d'erreur de positionnement des informations de positionnement actuelles sur la base d'une valeur d'erreur de positionnement historique d'informations de positionnement historiques du terminal dans une dernière période historique prédéfinie; et
l'obtention (203) d'informations routières pour les informations de positionnement actuelles destinées à être utilisées comme informations routières cibles sur la base du seuil d'erreur de positionnement, dans lequel une valeur d'erreur de positionnement entre les informations routières et les informations de positionnement actuelles est inférieure au seuil d'erreur de positionnement, et les informations routières incluent au moins l'un parmi: une unité de réseau routier ou une unité d'itinéraire de conduite, dans lequel l'unité de réseau routier fait référence à une section routière dans un réseau routier, et l'unité d'itinéraire de conduite fait référence à une section routière dans un itinéraire de conduite;
**caractérisé en ce que**:
la détermination du seuil d'erreur de positionnement des informations de positionnement actuelles sur la base de la valeur d'erreur de positionnement historique des informations de positionnement historiques du terminal dans la dernière période historique prédéfinie comprend:

l'acquisition d'un type de route actuel du terminal; et
la détermination du seuil d'erreur de positionnement des informations de positionnement actuelles sur la base de la valeur d'erreur de positionnement historique et du type de route actuel, dans lequel le seuil d'erreur de positionnement comprend un seuil d'erreur de distance et un seuil d'erreur d'angle, et le type de route actuel a une tendance d'ajustement correspondant au seuil d'erreur de positionnement, par exemple: si le type de route actuel est un périphérique, une tendance d'ajustement correspondant au périphérique est de diminuer le seuil de distance et d'augmenter le seuil d'angle; ou si le type de route actuel est un tunnel, une tendance d'ajustement correspondant au tunnel est d'augmenter le seuil de distance et de diminuer le seuil d'angle;
dans lequel l'acquisition du type de route actuel du terminal comprend:
l'utilisation d'un type de route des informations routières cibles mises en correspondance dans un cycle de mise en correspondance de route précédent comme type de route actuel.

**2.** Procédé selon la revendication 1, dans lequel l'obtention des informations routières pour les informations de positionnement actuelles sur la base du seuil d'erreur de positionnement, dans lequel la valeur d'erreur de positionnement entre les informations routières et les informations de positionnement actuelles est inférieure au seuil d'erreur de positionnement, comprend:

le téléchargement d'une requête de mise à jour de seuil vers un serveur, et la réception d'informations de mise à jour concernant le seuil d'erreur de positionnement renvoyées par le serveur; et
la mise à jour du seuil d'erreur de positionnement à l'aide des informations de mise à jour pour obtenir un seuil d'erreur de positionnement mis à jour, et l'obtention d'informations routières sur la base du seuil d'erreur de positionnement mis à jour, dans lequel la valeur d'erreur de positionnement entre les informations routières et les informations de positionnement actuelles est inférieure au seuil d'erreur de positionnement mis à jour.

**3.** Procédé selon la revendication 2, dans lequel la requête de mise à jour de seuil comprend une trajectoire du terminal et les informations routières cibles; et
le téléchargement de la requête de mise à jour de seuil vers le serveur comprend:
le téléchargement de la requête de mise à jour de seuil vers le serveur, dans lequel le serveur détermine, sur la base de la trajectoire, les informations routières du terminal comme informations routières de référence, et génère les informations de mise à jour concernant le seuil d'erreur de positionnement sur la base des informations routières de référence et des informations routières cibles.

**4.** Procédé selon l'une quelconque des revendications 1 à 3, dans lequel après la détermination du seuil d'erreur de positionnement des informations de positionnement actuelles, le procédé comprend en outre:
la génération d'un nouveau seuil d'erreur de positionnement sur la base des paramètres suivants:
un seuil d'erreur de positionnement déterminé par le terminal, une confiance du seuil d'erreur de positionnement, un nombre de répétitions de détermination du seuil d'erreur de positionnement au niveau du terminal, un seuil d'erreur de positionnement de référence déterminé par un serveur, une confiance du seuil d'erreur de positionnement de référence, et un nombre de répétitions de détermination du seuil d'erreur de positionnement de référence au niveau du serveur.

**5.** Procédé selon la revendication 4, dans lequel la génération du seuil d'erreur de positionnement de référence comprend:
la génération du seuil d'erreur de positionnement de référence sur la base des paramètres suivants du cycle de mise en correspondance de route actuel:
le seuil d'erreur de positionnement déterminé par le terminal, l'actualité du seuil d'erreur de positionnement, le nombre d'itérations du seuil d'erreur de positionnement au niveau du terminal, un seuil d'erreur de positionnement à corriger déterminé par le serveur, l'actualité du seuil d'erreur de positionnement à corriger, et le nombre d'itérations du seuil d'erreur de positionnement à corriger au niveau du serveur.

**6.** Procédé selon l'une quelconque des revendications 1 à 5, dans lequel le seuil d'erreur de positionnement comprend un seuil de confiance, et la valeur d'erreur de positionnement comprend une erreur de distance et une erreur d'angle; et

le procédé comprend en outre: la détermination (403) d'au moins deux éléments d'informations routières candidates du terminal sur la base des informations de positionnement actuelles; et
l'obtention des informations routières pour les informations de positionnement actuelles sur la base du seuil d'erreur de positionnement, dans lequel la valeur d'erreur de positionnement entre les informations routières et les informations de positionnement actuelles satisfait le seuil d'erreur de positionnement, comprend:
pour chaque erreur de distance et chaque erreur d'angle correspondant à chacune des au moins deux informations routières candidates:

la réalisation (404) d'un traitement prédéfini sur l'erreur de distance et l'erreur d'angle, dans lequel, pour l'erreur de distance et l'erreur d'angle, plus une valeur de l'erreur de distance ou de l'erreur d'angle est élevée, plus le résultat obtenu par le traitement prédéfini est petit;

la pondération (405) d'une erreur de distance traitée prédéfinie obtenue et d'une erreur d'angle traitée prédéfinie, et l'utilisation des résultats de pondération comme confiance de liaison routière, dans lequel la liaison routière fait référence à la liaison d'informations de positionnement à des informations routières; et l'obtention (406) de deuxièmes informations routières à partir des au moins deux éléments d'informations routières candidates destinées à être utilisées comme informations routières cibles, dans lequel une confiance de liaison routière des deuxièmes informations routières atteint le seuil de confiance.

7.  Procédé selon l'une quelconque des revendications 1 à 6, dans lequel la valeur d'erreur de positionnement historique comprend une variance d'erreur de distance et une variance d'erreur d'angle; et

le procédé comprend en outre:

la détermination, pour au moins deux informations routières candidates, d'un poids de l'erreur de distance et d'un poids de l'erreur d'angle sur la base de la variance d'erreur de distance et de la variance d'erreur d'angle; dans lequel la détermination, pour au moins deux informations routières candidates, d'un poids de l'erreur de distance et d'un poids de l'erreur d'angle sur la base de la variance d'erreur de distance et de la variance d'erreur d'angle, comprend:

l'introduction de la variance d'erreur de distance et de la variance d'erreur d'angle dans un modèle pré-entraîné; et
l'obtention du poids de l'erreur de distance et du poids de l'erreur d'angle émis par le modèle pré-entraîné.

8.  Procédé selon la revendication 6, dans lequel
l'obtention des deuxièmes informations routières destinées à être utilisées comme informations routières cibles pour les informations de positionnement actuelles sur la base du seuil d'erreur de positionnement, dans lequel la confiance de liaison routière des deuxièmes informations routières atteint le seuil de confiance, comprend:
l'obtention de deuxièmes informations routières candidates à partir des au moins deux éléments d'informations routières candidates, dans lequel pour les deuxièmes informations routières candidates, l'erreur de distance traitée prédéfinie atteint le seuil d'erreur de distance, l'erreur d'angle traitée prédéfinie atteint le seuil d'erreur d'angle, et la confiance de liaison routière atteint le seuil de confiance; et l'utilisation d'informations routières correspondant aux deuxièmes informations routières candidates comme informations routières cibles.

9.  Procédé selon l'une quelconque des revendications 1 à 8, dans lequel les informations routières sont l'unité de réseau routier, l'unité d'itinéraire de conduite ou les informations de positionnement; et
l'obtention des informations routières par la mise en correspondance, dans lequel la valeur d'erreur de positionnement entre les informations routières et les informations de positionnement actuelles satisfait le seuil d'erreur de positionnement, comprend:

la mise en correspondance des informations de positionnement actuelles avec l'unité d'itinéraire de conduite;
l'utilisation, en réponse à l'obtention d'une unité d'itinéraire de conduite correspondante, de l'unité d'itinéraire de conduite correspondante comme informations routières cibles; et
la mise en correspondance, en réponse à la non-obtention de l'unité d'itinéraire de conduite correspondante, des informations de positionnement avec l'unité de réseau routier; l'utilisation, en réponse à l'obtention d'une unité de réseau routier correspondante, de l'unité de réseau routier correspondante comme informations routières cibles; et l'utilisation, en réponse à la non-obtention de l'unité de réseau routier correspondante, des informations de positionnement actuelles comme informations routières cibles.

10. Appareil pour déterminer des informations routières, appliquées à un terminal, l'appareil comprenant:

une unité d'acquisition (501) configurée pour acquérir des informations de positionnement actuelles du terminal;
une unité de détermination (502) configurée pour déterminer un seuil d'erreur de positionnement des informations de positionnement actuelles sur la base d'une valeur d'erreur de positionnement historique d'informations de positionnement historiques du terminal dans une dernière période historique prédéfinie; et
une unité de mise en correspondance (503) configurée pour obtenir des informations routières pour les informations de positionnement actuelles destinées à être utilisées comme informations routières cibles sur la base du seuil d'erreur de positionnement, dans lequel une valeur d'erreur de positionnement entre les informations routières et les informations de positionnement actuelles est inférieure au seuil d'erreur de positionnement, et les informations routières incluent au moins l'un de: une unité de réseau routier ou une unité d'itinéraire de conduite, dans lequel l'unité de réseau routier fait référence à une section routière dans un réseau routier, et l'unité d'itinéraire de conduite fait référence à une section routière dans un itinéraire de conduite;
**caractérisé en ce que**:

l'unité de détermination est en outre configurée pour exécuter la détermination du seuil d'erreur de positionnement des informations de positionnement actuelles sur la base de la valeur d'erreur de positionnement historique des informations de positionnement historiques du terminal dans la dernière période historique prédéfinie en: acquérant un type de route actuel du terminal; et en déterminant le seuil d'erreur de positionnement des informations de positionnement actuelles sur la base de la valeur d'erreur de positionnement historique et du type de route actuel, dans lequel le seuil d'erreur de positionnement comprend un seuil d'erreur de distance et un seuil d'erreur d'angle, et le type de route actuel a une tendance d'ajustement correspondant au seuil d'erreur de positionnement, par exemple: si le type de route actuel est un périphérique, une tendance d'ajustement correspondant au périphérique est de diminuer le seuil de distance et augmenter le seuil d'angle; ou si le type de route actuel est un tunnel, une tendance d'ajustement correspondant au tunnel est d'augmenter le seuil de distance et diminuer le seuil d'angle;
dans lequel l'unité de détermination est en outre configurée pour exécuter l'acquisition du type de route actuel du terminal en: utilisant un type de route des informations routières cibles mises en correspondance dans un cycle de mise en correspondance de route précédent comme type de route actuel.

11. Appareil selon la revendication 10, dans lequel l'unité de mise en correspondance est configurée pour exécuter l'obtention des informations routières pour les informations de positionnement actuelles sur la base du seuil d'erreur de positionnement, dans lequel la valeur d'erreur de positionnement entre les informations routières et les informations de positionnement actuelles est inférieure au seuil d'erreur de positionnement en:

téléchargeant une requête de mise à jour de seuil vers un serveur, et recevant des informations de mise à jour concernant le seuil d'erreur de positionnement renvoyées par le serveur; et
mettant à jour le seuil d'erreur de positionnement à l'aide des informations de mise à jour pour obtenir un seuil d'erreur de positionnement mis à jour, et obtenant les informations routières sur la base du seuil d'erreur de positionnement mis à jour, dans lequel la valeur d'erreur de positionnement entre les informations routières et les informations de positionnement actuelles est inférieure au seuil d'erreur de positionnement mis à jour.

12. Support de stockage non transitoire lisible par ordinateur stockant des instructions informatiques, dans lequel les instructions informatiques sont utilisées pour amener un ordinateur à exécuter le procédé selon l'une quelconque des revendications 1 à 9.

13. Produit programme informatique, comprenant un programme informatique, dans lequel le programme informatique, lorsqu'il est exécuté par un processeur, met en oeuvre le procédé selon l'une quelconque des revendications 1 à 9.

100

103

102

104

105

103

Fig. 1

<u>200</u>

201

Acquiring current positioning information of a terminal

202

Determining a positioning error threshold of the current positioning information based on a historical positioning error value of historical positioning information of the terminal in a latest preset historical period

203

Obtaining road information for use as target road information by matching, where a positioning error value between the road information and the current positioning information satisfies the positioning error threshold

Fig. 2

Fig. 3

400

401

Acquiring current positioning information of a
terminal

402

Determining a positioning error threshold of the
current positioning information based on a historical
positioning error value of positioning information of
the terminal in a latest preset historical period

403

Determining at least two candidate road information
of the terminal based on the current positioning
information

404

Performing preset processing on a distance error and
an angle error

405

Weighting the distance error obtained by the preset
processing and the angle error obtained by the preset
processing, and using weighing results as a road
binding confidence

406

Obtaining second road information from the at
least two candidate road information
for use as the target road information by matching,
where a road binding confidence of the second
road information reaches the confidence threshold

Fig. 4

500

Apparatus for determining
road information

501

Acquiring unit

502

Determining unit

503

Matching unit

Fig. 5

602

Memory

603

Input
apparatus

Bus

601

Processor

604

Output
apparatus

Fig. 6

**EP 4 030 139 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010324815 A1
- WO 2008140166 A1
- US 2011241935 A1
- US 2016327400 A1